(19) Europäisches Patentamt
European Patent Office
Office européen des brevets

(11) **EP 2 343 879 A1**

(12) **EUROPEAN PATENT APPLICATION**
published in accordance with Art. 153(4) EPC

(43) Date of publication:
**13.07.2011 Bulletin 2011/28**

(51) Int Cl.:
***H04N 5/232*** (2006.01)

(21) Application number: **09821568.4**

(22) Date of filing: **13.10.2009**

(86) International application number:
**PCT/CN2009/074419**

(87) International publication number:
**WO 2010/045847 (29.04.2010 Gazette 2010/17)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **20.10.2008 CN 200810217092**

(71) Applicant: **Huawei Device Co., Ltd.
Shenzhen, Guangdong 518129 (CN)**

(72) Inventor: **GAI, Wencai
Shenzhen
Guangdong 518129 (CN)**

(74) Representative: **Körber, Martin Hans
Mitscherlich & Partner
Patent- und Rechtsanwälte
Sonnenstraße 33
80331 München (DE)**

(54) **CONTROL METHOD, SYSTEM AND APPARATUS FOR FAR-END CAMERA**

(57) The present invention discloses a method, a system, and an apparatus for controlling a remote camera. The method includes: obtaining a panorama of a remote scene and a mapping relation between a coordinate system of the panorama of the remote scene and a control coordinate system of the remote camera, where the panorama of the remote scene is created by the remote camera and the mapping relation between the coordinate system of the panorama of the remote conference site and the control coordinate system of the remote camera is created by the remote terminal; and controlling the remote camera according to the panorama of the remote scene and the mapping relation between the two coordinate systems. With the technical solution of the present invention, the local user can control the remote camera more easily so as to view different positions at a remote scene according to the mapping relation. The control process is visualized and simplified and therefore the user experience is enhanced.

Obtain a panorama of a remote conference site and the mapping relation between the coordinate system of the panorama and the coordinate system of the remote camera, where the panorama of the remote conference site is created by the remote camera and the mapping relation between the coordinate system of the panorama and the coordinate system of the remote camera is created by the remote terminal — 101

Control the remote camera according to the panorama of the remote conference site and the mapping relation between the two coordinate systems — 102

FIG. 1

## Description

This application claims priority to Chinese Patent Application No. 200810217092.3, filed on October 20, 2008 and entitled "Method, System, and Apparatus for Controlling a Remote Camera".

### Field of the Invention

The present invention relates to video technologies, and in particular, to a method, a system, and an apparatus for controlling a remote camera.

### Background of the Invention

With the popularity of broadband services, the development of computer technologies, and the improvement of image processing technologies, applications integrating video technologies and modern communications technologies become more and more important to governments and communications vendors. Installing cameras to collect images in appropriate scenes has become an important means of image collection in the field of video technologies. A camera generally provides the Pan/Tilt/Zoom (PTZ) control function, which enables a user to control a remote camera through a console, so that the user can actively observe different positions at a remote scene. The remote scene is thus photographed.

The prior art provides two methods for adjusting a remote camera. In one method, the user controls the camera of a remote terminal through a local terminal, directly to control the remote camera to move left or right, or up or down, or zoom in or out. The local terminal sends a control command to the remote terminal over a signaling channel and the remote terminal controls its camera to perform the specified action. In another method in the prior art, before the camera is put into service, the user sets the parameters of certain positions where the remote camera is located and stores the parameters corresponding to the positions. During monitoring, the user chooses a preset position according to the stored parameters, to control the remote camera to change to the position.

The prior art has at least the following weakness:

(1) In the first method, the camera is controlled manually and the user must make judgment according to the video images controlled by the camera, which generally requires multiple controlling actions to achieve a satisfactory result. The duration of a control process is long and the views are impacted.

(2) In the second method, some positions are preset and parameters of the remote camera corresponding to these positions are stored. The user is unable to know the photographing result at the preset positions. The preset positions are normally limited (6-12 positions). If the photographing result is not satisfactory to the user, the user must control the position of the camera manually by using the first method. The control process is complicated and the operation is not user friendly.

### Summary of the Invention

Embodiments of the present invention provide a method, a system, and an apparatus for controlling a remote camera to reduce the complexity of controlling a remote camera in the prior art.

A method for controlling a remote camera includes:

obtaining a panorama of a remote scene and a mapping relation between a coordinate system of the panorama of the remote scene and a coordinate system of a remote camera, where the panorama of the remote scene is created by the remote camera and the mapping relation between the coordinate system of the panorama of the remote scene and the control coordinate system of the remote camera is created by the remote terminal; and
controlling the remote camera according to the panorama of the remote scene and the mapping relation between the two coordinate systems.

Another method for controlling a remote camera includes:

Creating, by a terminal, a coordinate system for a remote camera, creating a panorama of a remote scene according to the control coordinate system of the remote camera, and creating a mapping relation between a coordinate system of the panorama of the remote scene and the control coordinate system of the remote camera;
Sending, by the terminal, the panorama of the remote scene and the mapping relation between the coordinate system of the panorama of the remote scene and the control coordinate system of the remote camera to a peer terminal;

Receiving, by the terminal, a control command sent by the peer terminal; and
Controlling, by the terminal, the remote camera according to the control command.

An apparatus for controlling a remote camera includes:

an obtaining unit, configured to obtain a panorama of a remote scene and a mapping relation between a coordinate system of the panorama of the remote scene and a control coordinate system of the remote camera; and
a controlling unit, configured to control the remote camera according to the panorama of the remote scene and the mapping relation between the two coordinate systems.

Another apparatus for controlling a remote camera includes:

a creating unit, configured to create a panorama of a remote scene, a control coordinate system of the remote camera, and a mapping relation between a coordinate system of the panorama of the remote scene and the control coordinate system of the remote camera;
a sending unit, configured to send the panorama of the remote scene and the mapping relation between the coordinate system of the panorama of the remote scene and the control coordinate system of the remote camera to a peer terminal;
a control command receiving unit, configured to receive a control command sent by the peer terminal; and
a controlling unit, configured to control the remote camera according to the received control command.

A system for controlling a camera includes a first control apparatus and a second control apparatus that are connected to each other through a network, where:

the first control apparatus is configured to: create a panorama of a local scene, a control coordinate system of a local camera, and a mapping relation between a coordinate system of the panorama of the local scene and the control coordinate system of the local camera; send the panorama of the local scene and the mapping relation between the coordinate system of the panorama of the local scene and the coordinate system of the local camera to a peer terminal; receive a control command sent by the peer terminal; and control the camera according to the control command; and
the second control apparatus is configured to: obtain the panorama sent by the first control apparatus and the mapping relation between the coordinate system of the panorama of the scene where the first control apparatus is located and the coordinate system of the camera at the scene where the first control apparatus is located; and control the camera at the scene where the first control apparatus is located according to the panorama of the scene where the first control apparatus is located and the mapping relation between the two coordinate systems.

The technical solution of the embodiments of the present invention provides the following benefits: The remote panorama and the mapping relation between the coordinate system of the panorama and the control coordinate system of the remote camera are sent to the local terminal, so that the local user can control the remote camera more easily to observe different positions at the remote scene according to the mapping relation. The operation process is visualized and simplified and therefore the user experience is enhanced.

**Brief Description of the Drawings**

The accompanying drawings are provided herein to help further understand the present invention and constitute a part of the application without limiting the present invention. In the accompanying drawings:

FIG. 1 illustrates a procedure of a first method embodiment of the present invention;
FIG. 2 illustrates a procedure of a second method embodiment of the present invention;
FIG. 3 illustrates a procedure of a third method embodiment of the present invention;
FIG. 4 illustrates a coordinate system of a remote camera created in the third method embodiment of the present invention;
FIG. 5 illustrates a mapping relation created between the panorama of the remote scene and the control coordinate system of the remote camera in the third method embodiment of the present invention;
FIG. 6 illustrates a structure in a system embodiment of the present invention;
FIG. 7 illustrates a structure of a first apparatus embodiment of the present invention;
FIG. 8 illustrates a structure of a creating unit in the first apparatus embodiment of the present invention;
FIG. 9 illustrates a structure of a controlling unit in the first apparatus embodiment of the present invention;

FIG. 10 illustrates a structure of a second apparatus embodiment of the present invention; and

FIG. 11 illustrates a structure of a controlling unit in the second apparatus embodiment of the present invention.

## Detailed Description of the Embodiments

To better explain the purpose, technical solution and benefits of the present invention, the embodiments of the present invention are hereinafter described in detail with reference to the accompanying drawings. Here, the exemplary embodiments of the present invention and related descriptions are intended to explain the present invention without limiting the present invention.

In view of the wide application of video conferencing, the embodiments of the present invention take a technique to control a remote camera for video conferencing as an example. The technique obtains a panorama of the remote conference site and the mapping relation between the coordinate system of the panorama of the remote conference site and the control coordinate system of the remote camera so as to control the camera at the remote conference site. The technique effectively reduces the complexity of controlling a remote camera in the prior art.

## Method Embodiments

## First Method Embodiment

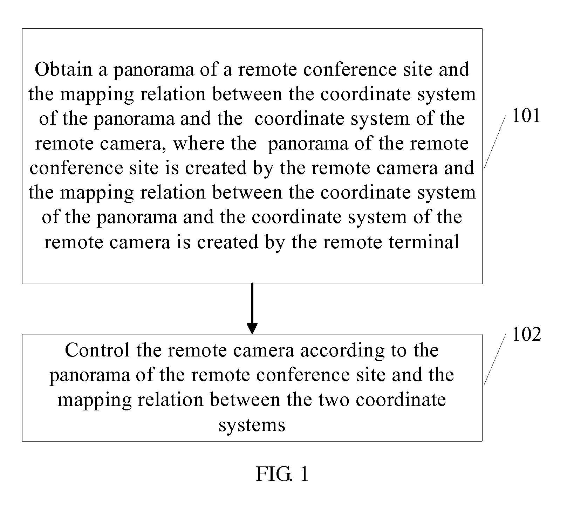

The method for controlling a remote camera according to a first method embodiment of the present invention is illustrated in FIG. 1. The method includes the following steps:

101. Obtaining, by a local terminal, a panorama of a remote conference site and the mapping relation between the coordinate system of the panorama of the remote conference site and the control coordinate system of a remote camera, where the panorama of the remote conference site is created by the remote camera and the mapping relation between the coordinate system of the panorama of the remote conference site and the control coordinate system of the remote camera is created by the remote terminal.

In this step, the camera located in the remote conference site creates the panorama of the remote conference site. The mapping relation between the coordinate system of the panorama of the remote conference site and the control coordinate system of the remote camera is created by the remote terminal. The panorama and the mapping relation between the two coordinate systems are obtained through the control data channel of the remote camera or the conference data channel.

102. Control the remote camera according to the panorama of the remote conference site and the mapping relation between the two coordinate systems.

In step 102, controlling the remote camera according to the panorama of the remote conference site and the mapping relation between the two coordinate systems is as follows: establishing a control channel of the remote camera; obtaining a control command from a user through the control channel; converting the control command into a coordinate in the control coordinate system of the remote camera according to the mapping relation between the coordinate system of the panorama of the remote conference site and the control coordinate system of the remote camera; and sending the coordinate in the coordinate system converted from the control command to the peer terminal through the control channel of the remote camera.

The control command of the user includes: an image area selected by the user or a coordinate of one image pixel selected by the user.

With the technical solution of the embodiment of the present invention, the local user can control the remote camera more easily so as to view different positions at the remote conference site according to the mapping relation. The control process is visualized and simplified and therefore the user experience is enhanced.

## Second Method Embodiment

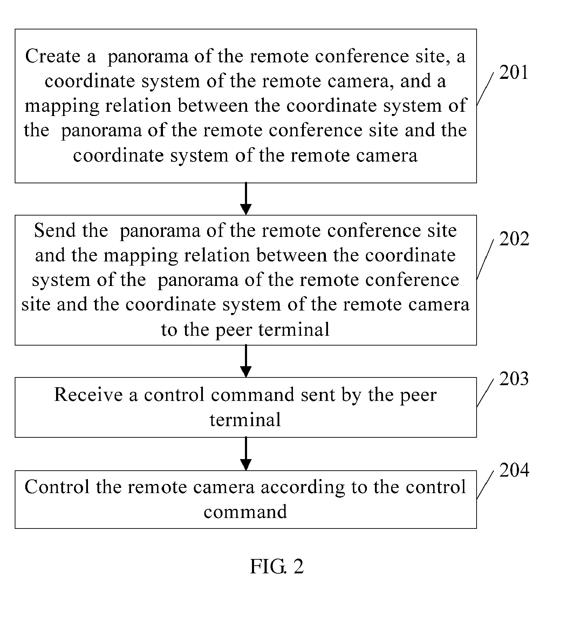

The method for controlling a remote camera according to a second method embodiment of the present invention is illustrated in FIG. 2. The method includes the following steps:

201. Create a control coordinate system of the remote camera, create a panorama of a remote conference site according to the control coordinate system of the remote camera, and create a mapping relation between the coordinate system of the panorama of the remote conference site and the control coordinate system of the remote camera.

In this step, the creation of the control coordinate system of the remote camera includes: defining the vertex at the upper-left corner within the view range of the remote camera as the origin of the control coordinate system; and creating the control coordinate system of the remote camera in the rightward, downward and inward directions.

The process of creating the panorama of the remote conference site according to the control coordinate system of the remote camera includes: by the remote terminal, controlling the remote camera to scan the view range of the camera when the camera has the smallest focal length; adjusting the view range of the remote camera after scanning the scene within a current view range so that the remote camera creates a panorama of the remote conference site.

The process of creating the mapping relation between the coordinate system of the panorama of the remote conference site and the control coordinate system of the remote camera includes: taking the view range of the camera obtained when the focal length of the remote camera is adjusted to the smallest as the reference view for zooming a camera view; setting the origin of the control coordinate system of the remote camera to enable the origin to locate at the center of the reference view the origin of which locates at the origin of the panorama and setting a maximum coordinate of the remote camera to enable the maximum coordinate to locate at the center of the reference view the maximum coordinate of which locates at the maximum coordinate of the panorama; and creating the mapping relation between the panorama of the remote conference site and the control coordinate system of the remote camera based on the origin of the coordinate system of the remote camera and the maximum control coordinate of the remote camera.

202. Send the panorama of the remote conference site and the mapping relation between the coordinate system of the panorama of the remote conference site and the control coordinate system of the remote camera to the peer terminal.

In this step, specifically, the panorama of the remote conference site and the mapping relation between the coordinate system of the panorama of the remote conference site and the control coordinate system of the remote camera are sent to the peer terminal through the control data channel of the remote camera or through the conference data channel.

203. Receive a control command sent by the peer terminal.

204. Control the remote camera according to the control command.

In this step, the process of controlling the remote camera according to the control command includes: by the remote terminal, receiving the control command sent by the peer terminal; converting the control command into a coordinate in the control coordinate system of the remote camera; and adjusting the PTZ parameters of the remote camera according to the coordinate converted from the control command so as to switch the camera view to the view specified by the peer terminal.

With the technical solution of the embodiment of the present invention, the local user can control the remote camera more easily so as to view different positions at the remote conference site according to the mapping relation. The control process is visualized and simplified and therefore the user experience is enhanced.

**Third Method Embodiment**

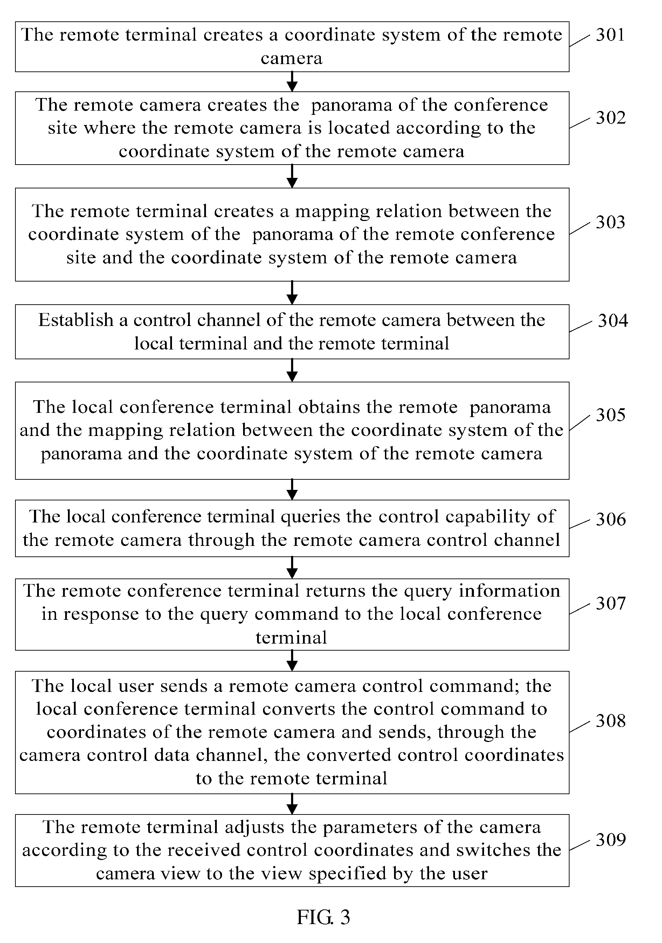

The method for controlling a remote camera according to a third method embodiment of the present invention is illustrated in FIG. 3. The method includes the following steps:

301. The remote terminal creates a control coordinate system of the remote camera.

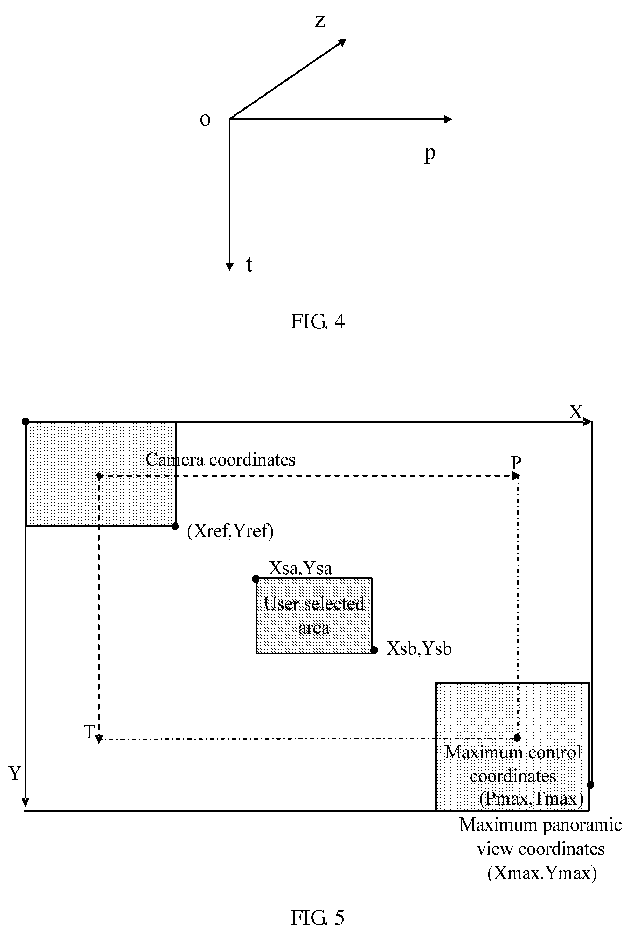

In this step, the control coordinate system of the remote camera includes components of three dimensions: (P, T,Z). The specific structure of the coordinate system is illustrated in FIG. 4. The control coordinate system of the remote camera includes three coordinate axes: $p$, $t$, and $z$. The origin is o. The origin of the $p$ direction is located on the utmost left and the $p$ coordinate increases rightwards. The origin of the $t$ direction is located on the top and the $t$ coordinate increases downwards. The origin of the direction is the utmost zoom-out view of the camera (that is, where the view range is the largest) and the $z$ coordinate increases in the zoom-in direction. The control coordinate of the remote camera may be adjusted step by step. For example, the step size is a pace. Alternatively, the coordinate may be quantized to integers.

302. The remote camera creates the panorama of the conference site where the remote terminal is located according to the control coordinate system of the remote camera.

When the panorama of the conference site where the remote terminal is located is created, the remote terminal may control its camera to scan along *(p,t)* at *z* = 0 (that is, where the view angle is the smallest and the view range is the largest). The scanning may be: fix *t* first and scan along the *p* direction; then increase *t* and scan along the *p* direction. Because the view range of the camera is limited, when the camera creates the panorama of a remote conference site, scanning must be performed at intervals of the view range and then images obtained in different view ranges are stitched to create the panorama of the entire range controlled by the camera.

It is understood that, when the panorama of a camera is created, the camera may scan along *(p,t)* at *z* = 0 (that is, where the view angle is the smallest and the view range is the largest), and the scanning may be: fix p first and scan along the *t* direction; then increase *p* and scan along the *t* direction.

303. A remote conference terminal creates a mapping relation between the coordinate system of the panorama of the remote conference site and the control coordinate system of the remote camera.

In this step, as shown in FIG. 5, when the camera creates the panorama with a fixed zoom parameter (*z* = 0), the size of a camera view is taken as the reference view for zooming the camera view. In the embodiment of the present invention, the length of the reference view is Xref and the width is Yref. The coordinate origin of the camera locates at the center of the reference view the origin of which locates at the origin of the panorama origin and the maximum coordinate of the camera locates at the center of the reference view the maximum coordinate of which locates at the maximum coordinate of the panorama.

The coordinates *(X,Y)* in the panorama may have a one-dimensional linear relationship with the control coordinates of the remote camera and the ratio of the user selection area to the reference view has a one-dimensional linear relationship with the zoom parameter of the camera. As shown in FIG. 5, the user selects a rectangular area in the panorama, and the vertex on the upper left of the selected area is *(Xsa,Ysa)* and the lower-right vertex of the selected area is *(Xsb,Ysb)*. The corresponding control coordinates are:

$$Psa = \max((Xsa + Xsb - Xref)/2,0)*P\max/(X\max - Xref)$$

$$Tsa = \max((Ysa + Ysb - Yref)/2,0)*P\max/(Y\max - Yref)$$

$$Zsa = \min(Xref/(Xsb - Xsa),Yref/(Ysb - Ysa))$$

In the embodiment of the present invention, the mapping relation between the panorama and the control coordinate system of the remote camera is created by the remote conference terminal. It is understood that the mapping relation may also be created by a local conference terminal or another device independent of the local conference terminal and the remote conference terminal. This is not limited by the present invention.

304. Establish a control channel of the remote camera between the local terminal and the remote terminal.

In this step, the control channel of the camera may be a camera control channel generally-defined in video conferencing protocols such as H.320, H.323, or Session Initiation Protocol (SIP), or a new data channel.

305. The local conference terminal obtains the remote panorama and the mapping relation between the coordinate system of the panorama and the control coordinate system of the remote camera.

In this step, the local conference terminal may obtain the remote panorama and the mapping relation between the coordinate system of the panorama and the control coordinate system of the remote camera through the remote camera control channel established in step 304, such as the Far End Camera Control (FECC) channel defined in H. 320, H.323 or SIP; or the local conference terminal may obtain the panorama and the mapping relation through another data channel, which is not limited by the present invention.

306. The local conference terminal queries control capabilities of the remote camera through the remote camera control channel.

In this step, in a video conferencing application, the local conference terminal must know capabilities and a control mode of the remote camera. The following control can proceed only when the remote camera can be controlled.

307. The remote conference terminal returns the query information in response to the query command to the local conference terminal.

In this step, the query information includes the ability to be controlled or inability to be controlled.

308. The local user sends a remote camera control command; the local conference terminal converts the control command into a control coordinate of the remote camera and sends, through the camera control data channel, the control coordinate to the remote terminal.

In this step, the control coordinate is sent through the dedicated camera control data channel. In the existing video conferencing protocol such as H.320, H.323, and SIP, the protocol procedure for establishing the camera control channel is generally defined. Alternatively, the camera control command may be sent through a customized camera control channel (in compliance with a proprietary protocol) or the conference data channel.

The local conference terminal may send absolute control coordinates, which are determined according to the control coordinate system of the remote camera, or relative control coordinates according to the coordinates in the coordinate system of the camera. For example, the current control coordinates P, T, and Z of the camera are (10 paces, 8 paces, 6 paces) and the new control coordinates converted from the control command sent by the user are (12 paces, 10 paces, 4 paces). Then, the local conference terminal can send the relative control coordinates, that is, (2 paces, 2 paces, -2 paces), according to the current control coordinates of the camera. The remote camera can adjust the current control coordinates (10 paces, 8 paces, 6 paces) to the new control coordinates (12 paces, 10 paces, 4 paces) according to the relative control coordinates.

309. The remote terminal adjusts the parameters of the camera according to the received control coordinates and switches the camera view to the view specified by the user.

Some steps in the embodiment are not described. These steps can be implemented by those skilled in the art based on the prior art and the previous embodiment of the present invention and therefore are not further explained here.
With the technical solution of the embodiment of the present invention, a local user can control the remote camera more easily so as to view different positions at the remote conference site according to the mapping relation. The control process is visualized and simplified and therefore the user experience is enhanced.

**System Embodiment**

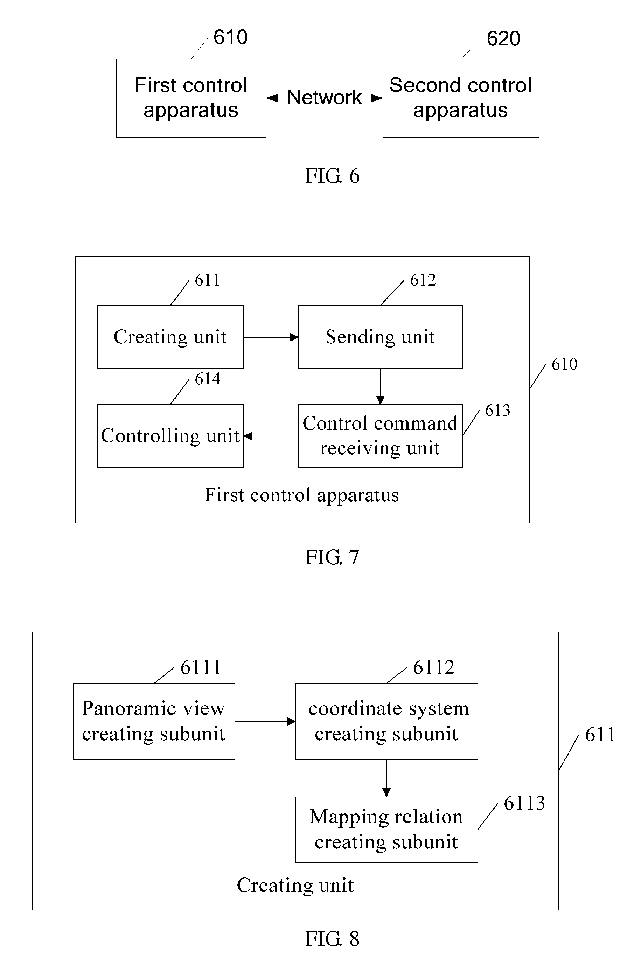

A camera control system for video conferencing provided according to an embodiment of the present invention is illustrated in FIG. 6. The system includes a first control apparatus 610 and a second control apparatus 620, where the first control apparatus 610 and the second control apparatus are connected to each other through a network.
The first control apparatus 610 is configured to create a panorama of the local conference site, a coordinate system of the camera of the local conference terminal, and a mapping relation between the coordinate system of the panorama of the conference site and the coordinate system of the camera of the local conference terminal; send the panorama of the local conference site and the mapping relation between the coordinate system of the panorama of the conference site and the coordinate system of the camera of the local conference terminal to the peer terminal; receive a control command sent by the peer terminal; and control the camera according to the control command.
The second control apparatus 620 is configured to obtain the panorama sent by the first control apparatus 610 and the mapping relation between the coordinate system of the panorama of the conference site where the first control apparatus 610 is located and the coordinate system of the camera at the conference site where the first control apparatus 610 is located; and control the camera at the conference site where the first control apparatus 610 is located according to the panorama of the conference site where the first control apparatus 610 is located and the mapping relation between the two coordinate systems.
With the technical solution of the embodiment of the present invention, a local user can control the remote camera more easily so as to view different positions at the remote conference site according to the mapping relation. The control process is visualized and simplified and therefore the user experience is enhanced.

## Apparatus Embodiments

### First Apparatus Embodiment

As shown in FIG. 7, the first control apparatus 610 includes: a creating unit 611, configured to create the panorama of the remote conference site, the control coordinate system of the remote camera, and the mapping relation between the coordinate system of the panorama of the remote conference site and the control coordinate system of the remote camera; a sending unit 612, configured to send the panorama of the remote conference site and the mapping relation between the coordinate system of the panorama of the remote conference site and the control coordinate system of the remote camera to the peer terminal; a control command receiving unit 613, configured to receive the control command sent by the peer terminal; and a controlling unit 614, configured to control the remote camera according to the received control command.

As shown in FIG. 8, the creating unit 611 includes a panorama creating subunit 6111, configured to create the panorama of the remote conference site; a coordinate system creating subunit 6112, configured to create the control coordinate system of the remote camera; and a mapping relation creating subunit 6113, configured to create the mapping relation between the coordinate system of the panorama of the remote conference site and the control coordinate system of the remote camera.

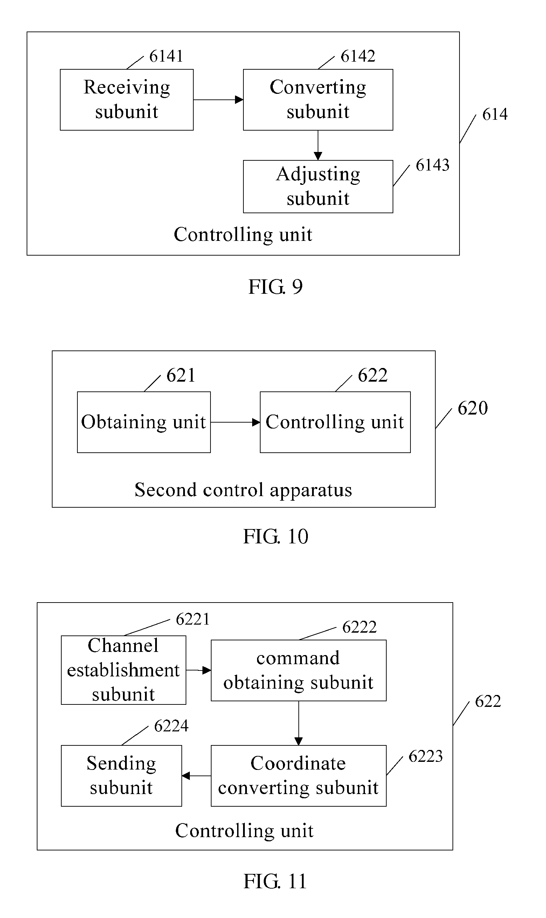

As shown in FIG. 9, the controlling unit 614 includes a receiving subunit 6141, configured to receive the control command sent by the peer terminal; a converting subunit 6142, configured to convert the control command to a coordinate in the control coordinate system of the remote camera; and an adjusting subunit 6143, configured to adjust the PTZ parameters of the remote camera according to the coordinate converted from the control command so as to switch the camera view to the view specified by the peer terminal.

With the technical solution of the embodiment of the present invention, the local user can control the remote camera more easily so as to view different positions at the remote conference site according to the mapping relation. The control process is visualized and simplified and therefore the user experience is enhanced.

### Second Apparatus Embodiment

As shown in FIG. 10, the second control apparatus 620 includes: an obtaining unit 621, configured to obtain the panorama of the remote conference site and the mapping relation between the coordinate system of the panorama of the remote conference site and the control coordinate system of the remote camera; and a controlling unit 622, configured to control the remote camera according to the panorama of the remote conference site and the mapping relation between the two coordinate systems.

As shown in FIG. 11, the controlling unit 622 includes: a channel establishment subunit 6221, configured to establish a control channel of the remote camera; a control command obtaining subunit 6222, configured to obtain the control command of the user through the control channel; a coordinate converting subunit 6223, configured to convert the control command into a coordinate in the control coordinate system of the remote camera according to the mapping relation between the coordinate system of the panorama of the remote conference site and the control coordinate system of the remote camera; and a sending subunit 6224, configured to send the coordinate in the coordinate system that are converted from the control command to the peer terminal through the control channel of the remote camera.

With the technical solution of the embodiment of the present invention, the local user can control the remote camera more easily so as to view different positions at the remote conference site according to the mapping relation. The control process is visualized and simplified and therefore the user experience is enhanced.

The above embodiments of the present invention are explained on the basis of an exemplary video conferencing scene. Nevertheless, the remote camera control technique is applicable to other scenes, such as a monitoring scene. As is known to all, in a monitoring scene, the monitoring camera photographs the target scene, or, the monitored scene, so that the remote terminal knows the status of the monitored scene through the image taken by the monitoring camera. A method for controlling a remote monitoring camera, for example, includes: obtaining the panorama of the remote monitored scene, and the mapping relation between the coordinate system of the panorama of the remote monitored scene and the control coordinate system of the remote camera, where, the panorama of the remote monitored scene is created by the remote monitoring camera and the mapping relation between the coordinate system of the panorama of the remote monitored scene and the coordinate system of the remote monitoring camera is created by the remote terminal; and controlling the remote camera according to the panorama of the remote monitored scene and the mapping relation. From the above, it is known that the method for controlling a remote monitoring camera is similar to that for controlling a camera at the remote site of a video conference. The photographed scene is different though.

Those skilled in the art should note that the establishment of the remote camera control channel in the monitoring scene is different from that in the video conferencing scene. In the video conferencing scene, the remote camera control channel can be established through the video conferencing protocol system, such as step 304 in the third method embodiment. Because there is no particular protocol in the monitoring field, the control data channel of the remote monitoring camera may be a customized camera control channel (in compliance with a proprietary protocol), for example, a continuous TCP/IP link or a non-continuous UDP link set according to actual need. Or, a monitoring data channel may be used (for example, multiplexing of the video/audio data channel) to transmit the camera control command.

Based on such understanding, those skilled in the art know that the remote camera control technique provided in the present invention is applicable to multiple scenes where a remote camera is controlled, such as a video conferencing scene and a video monitoring scene. Particularly, because the control process is visualized and simplified, the user experience is greatly enhanced.

The method or steps of the method provided in the embodiments disclosed herein can be implemented by using hardware, or a software module executed by a processor, or the combination of both. The software module may be placed in a random access memory (RAM), a memory, a read-only memory (ROM), an electrically programmable ROM, an electrically erasable programmable ROM, a register, a hard disk, a removable disk, a CD-ROM, or any other form of storage medium known in the art.

Although the purpose, technical solution and benefits of the present invention have been described in detail through exemplary embodiments, the invention is not limited to such embodiments. It is apparent that those skilled in the art can make various modifications and variations to the invention without departing from the spirit and scope of the present invention. The invention is intended to cover the modifications and variations provided that they fall within the scope of protection defined by the claims or their equivalents.

**Claims**

1.   A method for controlling a remote camera, comprising:

  obtaining, by a local terminal, a panorama of a remote scene and a mapping relation between a coordinate system of the panorama of the remote scene and a control coordinate system of a remote camera, wherein the panorama of the remote scene is created by the remote camera and the mapping relation between the coordinate system of the panorama of the remote scene and the control coordinate system of the remote camera is created by a remote terminal; and
  controlling, by the local terminal, the remote camera according to the panorama of the remote scene and the mapping relation between the two coordinate systems.

2.   The method of claim 1, wherein the controlling the remote camera according to the panorama of the remote scene and the mapping relation between the two coordinate systems comprises:

  establishing, by the local terminal, a remote control channel of the remote camera;
  obtaining, by the local terminal, a control command;
  converting, by the local terminal, the control command into a coordinate in the control coordinate system of the remote camera according to the mapping relation between the coordinate system of the panorama of the remote scene and the control coordinate system of the remote camera; and
  sending, by the local terminal, the coordinates in the control coordinate system converted from the control command to a peer terminal through the remote camera control channel.

3.   The method of claim 1, wherein the panorama of the remote scene and the mapping relation between the coordinate system of the panorama of the remote scene and the control coordinate system of the remote camera are obtained through a control data channel of the remote camera, or a customized data channel.

4.   The method of claim 2, wherein the control command comprises:

  a selected image area, or a coordinate of one selected image pixel.

5.   A method for controlling a remote camera, comprising:

  creating, by a terminal, a control coordinate system of a remote camera, creating a panorama of a remote scene according to the control coordinate system of the remote camera, and creating a mapping relation between a coordinate system of the panorama of the remote scene and the control coordinate system of the remote camera;
  sending, by the terminal, the panorama of the remote scene and the mapping relation between the coordinate system of the panorama of the remote scene and the control coordinate system of the remote camera to a peer terminal;

receiving, by the terminal, a control command sent by the peer terminal; and

controlling, by the terminal, the remote camera according to the control command.

6. The method of claim 5, wherein the creating the control coordinate system of the remote camera comprises:

setting a vertex on the upper left of the view range of the remote camera as an origin of the coordinate system; and
creating the control coordinate system of the remote camera in rightward, downward, and inward directions.

7. The method of claim 5, wherein the creating the panorama of the remote scene comprises:

controlling, by the terminal, the remote camera to scan the view range of the camera when the focal length of the remote camera is the smallest; and
after the view range is scanned, adjusting, by the terminal, the photographing range of the remote camera so that the remote camera photographs the entire remote scene and obtains a panorama of the remote scene.

8. The method of claim 5, wherein the creating the mapping relation between the coordinate system of the panorama of the remote scene and the control coordinate system of the remote camera comprises:

taking the view range of the camera obtained when the focal length of the remote camera is adjusted to the smallest as a reference view for zooming a camera view;
setting the origin of the control coordinate system of the remote camera to enable the origin to locate at the center of the reference view the origin of which locates at the origin of the panorama
and setting a maximum coordinate of the control coordinate system of the remote camera to enable the maximum coordinate to locate at the center of the reference view the maximum coordinate of which locates at the maximum coordinate of the panorama; and
creating the mapping relation between the coordinate system of the panorama of the remote scene and the control coordinate system of the remote camera based on the origin of the control coordinate system of the remote camera and the maximum control coordinate of the remote camera.

9. The method of claim 5, wherein the panorama of the remote scene and the mapping relation between the coordinate system of the panorama of the remote scene and the control coordinate system of the remote camera are sent to the peer terminal through a control data channel of the remote camera, or a customized data channel.

10. The method of claim 5, wherein the controlling the remote camera according to the control command comprises:

receiving, by the terminal, the control command sent by the peer terminal;
converting, by the terminal, the control command into a coordinate in the control coordinate system of the remote camera; and
adjusting, by the terminal, Pan/Tilt/Zoom (PTZ) parameters of the remote camera according to the coordinate converted from the control command and switching the camera view to the view specified by the peer terminal.

11. An apparatus for controlling a remote camera, comprising:

an obtaining unit, configured to obtain a panorama of a remote scene and a mapping relation between a coordinate system of the panorama of the remote scene and a coordinate system of a remote camera; and
a controlling unit, configured to control the remote camera according to the panorama of the remote scene and the mapping relation between the two coordinate systems.

12. The apparatus of claim 11, wherein the controlling unit comprises:

a channel establishment subunit, configured to establish a remote control channel with the remote terminal;
a control command obtaining subunit, configured to obtain a control command;
a coordinate converting subunit, configured to convert the control command into a coordinate in the control coordinate system of the remote camera according to the mapping relation between the coordinate system of the panorama of the remote scene and the control coordinate system of the remote camera; and
a sending subunit, configured to send, through the remote control channel, the coordinate in the coordinate system coordinateconverted from the control command to a peer terminal through the remote camera control channel.

**13.** An apparatus for controlling a remote camera, comprising:

a creating unit, configured to create a panorama of a remote scene, a control coordinate system of a remote camera, and a mapping relation between a coordinate system of the panorama of the remote scene and the control coordinate system of the remote camera;

a sending unit, configured to send the panorama of the remote scene and the mapping relation between the coordinate system of the panorama of the remote scene and the control coordinate system of the remote camera to a peer terminal;

a control command receiving unit, configured to receive a control command sent by the peer terminal; and

a controlling unit, configured to control the remote camera according to the control command.

**14.** The apparatus of claim 13, wherein the creating unit comprises:

a panorama creating subunit, configured to create the panorama of the remote scene;

a coordinate system creating subunit, configured to create the control coordinate system of the remote camera; and

a mapping relation creating subunit, configured to create the mapping relation between the coordinate system of the panorama of the remote scene and the control coordinate system of the remote camera.

**15.** The apparatus of claim 13, wherein the controlling unit comprises:

a receiving subunit, configured to receive the control command sent by the peer terminal;

a converting subunit, configured to convert the control command into a coordinate in the control coordinate system of the remote camerathe coordinate system of the remote camera; and

an adjusting subunit, configured to adjust Pan/Tilt/Zoom (PTZ) parameters of the remote camera according to the coordinate converted from the control command and switch the camera view to the view specified by the peer terminal.

**16.** A system for controlling a camera, comprising a first control apparatus and a second control apparatus that are connected to each other through a network, wherein:

the first control apparatus is configured to create a panorama of a local scene, a coordinate system of a local camera, and a mapping relation between a coordinate system of the panorama of the local scene and the coordinate system of the local camera; send the panorama of the local scene and the mapping relation between the coordinate system of the panorama of the local scene and the coordinate system of the local camera to a peer terminal; receive a control command sent by the peer terminal; and control the camera according to the control command; and

the second control apparatus is configured to obtain the panorama sent by the first control apparatus and the mapping relation between the coordinate system of the panorama of the scene where the first control apparatus is located and the control coordinate system of the camera at the scene where the first control apparatus is located; and control the camera at the scene where the first control apparatus is located according to the panorama of the scene where the first control apparatus is located and the mapping relation between the two coordinate systems.

Obtain a panorama of a remote conference site and the mapping relation between the coordinate system of the panorama and the  coordinate system of the remote camera, where the  panorama of the remote conference site is created by the remote camera and the mapping relation between the coordinate system of the panorama and the coordinate system of the remote camera is created by the remote terminal

101

Control the remote camera according to the panorama of the remote conference site and the mapping relation between the two coordinate systems

102

FIG. 1

Create a panorama of the remote conference site, a coordinate system of the remote camera, and a mapping relation between the coordinate system of the panorama of the remote conference site and the coordinate system of the remote camera /201

Send the panorama of the remote conference site and the mapping relation between the coordinate system of the panorama of the remote conference site and the coordinate system of the remote camera to the peer terminal /202

Receive a control command sent by the peer terminal /203

Control the remote camera according to the control command /204

FIG. 2

| The remote terminal creates a coordinate system of the remote camera | 301 |

↓

| The remote camera creates the panorama of the conference site where the remote camera is located according to the coordinate system of the remote camera | 302 |

↓

| The remote terminal creates a mapping relation between the coordinate system of the panorama of the remote conference site and the coordinate system of the remote camera | 303 |

↓

| Establish a control channel of the remote camera between the local terminal and the remote terminal | 304 |

↓

| The local conference terminal obtains the remote panorama and the mapping relation between the coordinate system of the panorama and the coordinate system of the remote camera | 305 |

↓

| The local conference terminal queries the control capability of the remote camera through the remote camera control channel | 306 |

↓

| The remote conference terminal returns the query information in response to the query command to the local conference terminal | 307 |

↓

| The local user sends a remote camera control command; the local conference terminal converts the control command to coordinates of the remote camera and sends, through the camera control data channel, the converted control coordinates to the remote terminal | 308 |

↓

| The remote terminal adjusts the parameters of the camera according to the received control coordinates and switches the camera view to the view specified by the user | 309 |

FIG. 3

FIG. 4

FIG. 5

610

620

First control
apparatus ◄─Network─► Second control
apparatus

FIG. 6

611

612

Creating unit ─► Sending unit

610

614

613

Controlling unit ◄─ Control command
receiving unit

First control apparatus

FIG. 7

6111

6112

Panoramic view
creating subunit ─► coordinate system
creating subunit

611

6113

Mapping relation
creating subunit

Creating unit

FIG. 8

6141 6142

Receiving
subunit

Converting
subunit

6143

Adjusting
subunit

614

Controlling unit

FIG. 9

621 622

Obtaining unit → Controlling unit

620

Second control apparatus

FIG. 10

6221 6222

Channel
establishment
subunit

command
obtaining subunit

622

6224

Sending
subunit

Coordinate
converting subunit

6223

Controlling unit

FIG. 11

# INTERNATIONAL SEARCH REPORT

| International application No. |
|---|
| PCT/CN2009/074419 |

**A. CLASSIFICATION OF SUBJECT MATTER**

H04N5/232(2006.01)i

According to International Patent Classification (IPC) or to both national classification and IPC

**B. FIELDS SEARCHED**

Minimum documentation searched (classification system followed by classification symbols)

IPC:H04N5/-

Documentation searched other than minimum documentation to the extent that such documents are included in the fields searched

Electronic data base consulted during the international search (name of data base and, where practicable, search terms used)

EPODOC,WPI: remote, far-end, camera, full view, panoramic view, PTZ, coordinate, system, control

CPRS,CNKI:

**C. DOCUMENTS CONSIDERED TO BE RELEVANT**

| Category* | Citation of document, with indication, where appropriate, of the relevant passages | Relevant to claim No. |
|---|---|---|
| PX | CN101404726A (SHENZHEN HUAWEI COMMUNICATION TECHNOLOGY) 08 Apr.2009（08.04.2009）the whole document | 1-16 |
| A | CN1703078A（FUKUSHIMA PREFECTURE）30 Nov. 2005（30.11.2005）the whole document | 1-16 |
| A | CN1554193A (STEVENSON N J et al.) 08 Dec. 2004（08.12.2004）the whole document | 1-16 |
| A | US2007159527A1（SAMSUNG ELECTRONICS CO LTD）12 Jul. 2007（12.07.2007）the whole document | 1-16 |
| A | US6084592A (MICROSOFT CORP) 04 Jul. 2000（04.07.2000）the whole document | 1-16 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 08 Jan. 2010(08.01.2010) | **21 Jan. 2010 (21.01.2010)** |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer LIU Huimin Telephone No. (86-10)62411530 |
|---|---|

Form PCT/ISA /210 (second sheet) (July 2009)

# INTERNATIONAL SEARCH REPORT
## Information on patent family members

| | International application No. |
|---|---|
| | PCT/CN2009/074419 |

| Patent Documents referred in the Report | Publication Date | Patent Family | Publication Date |
|---|---|---|---|
| CN101404726A | 08.04.2009 | none | |
| CN1703078A | 30.11.2005 | US2005264655A1 | 01.12.2005 |
| | | JP2005341060A | 08.12.2005 |
| CN1554193A | 08.12.2004 | WO03013140A1 | 13.02.2003 |
| | | GB2393350A | 24.03.2004 |
| | | AU2002355863A1 | 17.02.2003 |
| | | US2005036036A1 | 17.02.2005 |
| | | ZA200400635A | 26.04.2005 |
| | | GB2393350B | 08.03.2006 |
| US2007159527A1 | 12.07.2007 | KR100653200B1 | 05.12.2006 |
| | | JP2007183948A | 19.07.2007 |
| US6084592A | 04.07.2000 | none | |

Form PCT/ISA /210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200810217092